# EUROPÄISCHE PATENTSCHRIFT

(11) **EP 3 544 438 B1**
(45) Veröffentlichungstag und Bekanntmachung des Hinweises auf die Patenterteilung: **21.07.2021**
(21) Anmeldenummer: 17780322.8
(22) Anmeldetag: 19.09.2017
(51) Int. Cl.: A21C 3/06

(54) **VERFAHREN UND VORRICHTUNG ZUR HERSTELLUNG EINES WICKELS AUS EINEM TEIGSTÜCK UND EINEM TRENNBLATT**
METHOD AND APPARATUS FOR ROLLING A PIECE OF DOUGH AND A SEPARATING SHEET
MÉTHODE ET APPAREIL POUR ROULER UN MORCEAU DE PÂTE ET UNE FEUILLE DE SÉPARATION

(30) Priorität: 22.11.2016 DE 102016122447
(43) Veröffentlichungstag der Anmeldung: 02.10.2019
(73) Patentinhaber: Fritsch Bakery Technologies GmbH & Co. KG, 97348 Markt Einersheim (DE)
(72) Erfinder: BERNHARDT, Udo, 97346 Iphofen (DE)
(74) Vertreter: Grünecker Patent- und Rechtsanwälte PartG mbB
(86) Internationale Anmeldenummer: PCT/EP2017/073587
(87) Internationale Veröffentlichungsnummer: WO 2018/095608

(56) Entgegenhaltungen:
- EP-A2- 0 230 335
- EP-B1- 0 158 590
- EP-B1- 2 529 629
- WO-A1-97/02750
- US-A- 5 205 106

## Beschreibung

Die Erfindung betrifft ein Verfahren und eine Vorrichtung zur Herstellung eines Wickels aus einem Teigstück und einem Trennblatt nach der Lehre der unabhängigen Hauptansprüche.

Sowohl im Haushalt als auch bei Großverbrauchern macht das gleichmäßige Auswallen von Teigen, wie Kuchenteig, Mürbeteig, Blätterteig oder Pizzateig, erhebliche Schwierigkeiten. Wenn man nicht über eine Ausrollmaschine verfügt, ist es praktisch unmöglich, eine gleichmäßige Dicke des Teigstücks zu erzielen. Es besteht daher seit langer Zeit ein erheblicher Bedarf von vorgefertigten ausgewallten Teigstücken. Um die Lagerung und Verarbeitung der vorgefertigten ausgewallten Teigstücke zu vereinfachen ist es vielfach üblich, dass die ausgewallten Teigstücke bereits zusammen mit einem Trennblatt geliefert werden. Das Trennblatt dient dabei vielmehr dazu ein Verkleben des ausgewallten Teigstücks zu verhindern. Soweit das Trennblatt aus Backpapier besteht, kann es außerdem bei der Verwendung des Teigstücks während des Ausbackvorgangs zusätzlichen Nutzen bieten. Neben zu Faltpaketen gefalteten Darreichungsformen aus Teigstücken und Trennblatt haben sich insbesondere Wickel aus Teigstück und Trennblatt für die Lagerung und Verteilung der vorgefertigten Teigstücke als besonders vorteilhaft erwiesen. Denn bei gewickelten Teigstücken werden Faltenbildungen im Teig, die auch nach dem Ausbacken sichtbar bleiben, vermieden. Außerdem nimmt ein Wickel aus Teigstück und Trennblatt einen minimalen Lagerraum ein, so dass die vorgefertigten Wickel aus Teigstück und Trennblatt in relativ kleinen Verpackungseinheiten verpackt werden können. Für die Herstellung von Wickeln aus Teigstücken und Trennblatt sind aus dem Stand der Technik verschiedene Verfahren und Vorrichtungen bekannt.

Die EP 0 230 335 A2 beschreibt eine Vorrichtung mit einer Wickelhaspel. Diese Wickelhaspel greift die Vorderkante des Teigstücks mit dem daran anliegenden Trennblatt, so dass durch anschließende Rotation der Wickelhaspel ein Wickel aus Teigstück und Trennblatt hergestellt werden kann. Dieser Wickel wird anschließend von der Wickelhaspel abgeschoben und verpackt. Nachteilig an dieser Verfahrensweise ist es, dass sie eine hohe Prozesszeit aufweist und außerdem zur Faltenbildung im Griffbereich der Wickelhaspels neigt.

Die EP 2 529 629 B1 beschreibt ein Verfahren zur Herstellung von Wickeln aus einem Teigstück und einem Trennblatt, bei dem in einer Rollvorrichtung zur Herstellung des Wickels zunächst ein Zylinder aus dem Trennblattmaterial gerollt wird. Erst nach der Ausbildung eines vollständigen Zylinders, der aus dem Trennblattmaterial besteht, wird dann das Teigstück auf diesen Zylinder zusammen mit dem restlichen Trennblattmaterial aufgewickelt. Nachteilig an dieser Verfahrensweise ist es, dass zunächst ein vollständiger Zylinder aus dem Trennblattmaterial gerollt werden muss. Da das Trennblattmaterial regelmäßig sehr dünn ist und an der vorderen Blattkante eine hohe Instabilität aufweist, ist dieses Verfahren relativ störanfällig. Insbesondere bei hohen Taktfrequenzen mit entsprechend hohen Fördergeschwindigkeiten neigt das Trennblattmaterial, bei dem es sich beispielsweise um Backpapier handelt, zum unkontrollierten Umknicken und Verwerfen, so dass dadurch der gesamte Wickelprozess gestört und gegebenenfalls unterbrochen wird.

Aus der EP 0 158 590 B1 ist ein Verfahren zur Herstellung eines Wickels aus einem Teigstück und einem Trennblatt bekannt, bei dem vor dem eigentlichen Aufrollen des Wickels zunächst die Vorderkante und die Hinterkante des Trennblattmaterials über die Vorderkante bzw. die Hinterkante des Teigstücks übergelegt wird, so dass der entsprechende Überstand des Trennblattmaterials dann auf der Oberseite des Teigstücks aufliegt. Durch dieses Aufliegen des Überstands wird die Vorderkante bzw. die Hinterkante des Trennblattmaterials durch das Teigmaterial mechanisch stabilisiert, so dass Störungen durch unkontrollierte Bewegungen des überstehenden Trennblattmaterials ausgeschlossen sind. Allerdings ist zum Überlegen des Überstands des Trennblattmaterials eine zusätzliche Handhabungsvorrichtung notwendig, die ihrerseits wiederum eine hohe Störanfälligkeit aufweist. Üblicherweise wird das Überlegen des Überstands nämlich durch entsprechende Blasdüsen bewirkt, insbesondere bei sehr kurzen Taktzeiten mit entsprechend hohen Fördergeschwindigkeiten kann es jedoch dazu kommen, dass im Bereich des Überstands nicht sauber übergefaltet wird und dann wiederum Störungen ausgelöst werden.

US 5 205 106 A und WO 97/02750 A1 offenbaren weitere Verfahren zur Herstellung eines Wickels aus einem Teigstück und einem Trennblatt.

Ausgehend von diesem Stand der Technik ist es deshalb Aufgabe der vorliegenden Erfindung, ein neues Verfahren und eine neue Vorrichtung zur Herstellung eines Wickels aus einem Teigstück und einem Trennblatt vorzuschlagen. Die vorliegende Erfindung ist in den Ansprüchen definiert. Das erfindungsgemäße Verfahren beruht auf dem Grundgedanken, dass bei der Herstellung des Wickels aus Teigstück und Trennblatt eine Trennblattbahn verwendet wird, die einen Eigenspannungszustand in Richtung der Förderbewegung aufweist. Dieser Eigenspannungszustand ist dabei so zu wählen, dass sich das Trennblatt nach dem Ablängen selbsttätig aufrollt. Durch dieses selbsttätige Aufrollen der abgelängten Trennblattbahn im Bereich der Vorderkante bzw. der Hinterkante wird eine starke mechanische Stabilisierung der Vorderkante bzw. der Hinterkante realisiert, so dass ein unkontrolliertes Verwerfen bzw. Umfalten der Trennblattbahn vor, während und nach dem Rollen des Wickels aus Teigstück und Trennblatt ausgeschlossen ist.

Welche Geometrie die aufgerollte Vorderkante bzw. die aufgerollte Hinterkante aufweist, die sich durch das von der Eigenspannung verursachte Aufrollen der abgelängten Trennblattbahn ergibt, ist grundsätzlich beliebig. Je höher die Eigenspannung der Trennblattbahn in Richtung der Förderbewegung ist, desto kleiner ist der Rollradius des Überstands im Bereich der Vorderkante bzw. Hinterkante. Die Geometrie des aufgerollten Überstands kann durch die entsprechende Änderung des Eigenspannungszustands vor dem Ablängen der Trennblattbahn und durch die Länge des Überstands, d.h. den Abstand zwischen der Vorderkante des Trennblatts gegenüber der Vorderkante des Teigstücks bzw. Abstands zwischen der Hinterkante des Trennblatts gegenüber der Hinterkante des Teigstücks, beeinflusst werden. Besonders große Bedeutung für die Prozesssicherheit bei der Herstellung des Wickels aus Teigstück und Trennblatt hat die Geometrie des aufgerollten Überstands im Bereich der Vorderkante. Läuft nämlich die Vorderkante unkontrolliert in die Wickeleinrichtung zur Herstellung des Wickels ein, kommt es beinahe zwangsläufig zu Störungen beim Wickeln. Besonders vorteilhaft ist es deshalb, wenn das Trennblatt an der Vorderkante einen vorderen Überstand gegenüber der Vorderkante des Teigstücks aufweist, wobei die Vorderkante des Trennblatts durch das selbsttätige, durch den Eigenspannungszustand verursachte, Aufrollen auf der Oberseite des Teigstücks zur Anlage kommt. Beim anschließenden Aufrollen des Wickels wird der vordere Überstand des Trennblatts durch diese Geometrie dann über die Vorderkante des Teigstücks gelegt, so dass der Überstand des Trennblatts die Vorderkante des Teigstücks umgreift. Durch das Anliegen der Vorderkante des Trennblatts auf der Oberseite des Teigstücks wird diese entscheidend mechanisch stabilisiert, so dass ein unkontrolliertes Umbiegen oder Umfalten des Trennblatts im Bereich der Vorderkante auch bei hohen Fördergeschwindigkeiten und hohen Rollgeschwindigkeiten ausgeschlossen ist.

Weiterhin besonders vorteilhaft ist es, wenn das Trennblatt auch an der Hinterkante einen hinteren Überstand gegenüber der Hinterkante des Teigstücks aufweist. Nach dem Aufrollen des Wickels aus Teigstück und Trennblatt kann dieser hintere Überstand des Trennblatts den Wickel insgesamt außenseitig umfassen. Durch dieses außenseitige Umfassen wird eine Fixierung des Wickels erreicht, so dass insbesondere die ansonsten üblichen Klebestellen, mit denen die Hinterkante des Trennblatts auf dem Wickel aus Trennblatt und Teigstück fixiert wird, entfallen können. Je nach Länge des hinteren Überstands kann der hintere Überstand den Wickel aus Teigstück und Trennblatt auch in mehreren Lagen außenseitig zirkulär umgreifen und entsprechend gut fixieren.

Einen weiteren Vorteil im Hinblick auf die möglichen Taktzeiten ergibt das Verfahren dadurch, wenn durch das selbsttätige Aufrollen des Trennblatts an der Vorderkante und/oder an der Hinterkante ein Abstand in Förderrichtung zwischen den aufeinanderfolgenden Trennblättern gebildet wird. Denn durch diesen Abstand werden die aufeinanderfolgenden Trennblätter soweit voneinander getrennt, dass ein Einziehen der Vorderkante des nachfolgenden Trennblatts während des Wickelns des vorhergehenden Trennblatts ausgeschlossen ist.

Für die Durchführung des erfindungsgemäßen Verfahrens wird eine Trennblattbahn benötigt, die spätestens beim Ablängen einen Eigenspannungszustand aufweist, durch den das dadurch entstehende Trennblatt an der Vorderkante und/oder Hinterkante selbsttätig aufgerollt wird. Viele Trennblattmaterialien, beispielsweise Backpapier, werden üblicherweise aber nicht mit einem solchen Eigenspannungszustand ausgeliefert. Vielmehr weisen die üblichen Trennblattmaterialien einen Zustand ohne jegliche Eigenspannungen auf, so dass sich das Trennblattmaterial ohne entsprechende Einwirkung von außen im Wesentlichen nicht aufrollt. Um diese Trennblattmaterialien ohne eigenen Eigenspannungszustand für das erfindungsgemäße Verfahren verwenden zu können, weist die erfindungsgemäße Vorrichtung eine Einwirkeinrichtung auf, mit der ein entsprechender Eigenspannungszustand der Trennblattbahn erzeugt werden kann.

In welcher Weise die Einwirkeinrichtung den Eigenspannungszustand der Trennblattbahn verändert, um den gewünschten Eigenspannungszustand zu erzeugen, ist grundsätzlich beliebig. Besonders einfach und effektiv kann diese Einwirkung erreicht werden, wenn die Trennblattbahn vor dem Ablängen in geeigneter Weise verformt wird. Gemäß einer bevorzugten Vorrichtungsvariante ist es deshalb vorgesehen, dass die Einwirkeinrichtung eine Zugfördereinrichtung und eine Umlenkeinrichtung umfasst. Mittels der Zugfördereinrichtung kann auf einem bestimmten Abstand der Trennblattbahn eine Zugspannung ausreichender Stärke aufgebracht werden. Der so unter Zugspannung stehende Trennblattbahnabschnitt wird dann an der Umlenkeinrichtung um einen Umlenkwinkel umgelenkt. Durch die Umlenkung der Trennblattbahn an der Umlenkeinrichtung kommt es zwischen der Oberseite und der Unterseite der Trennblattbahn zu mikroskopischen Umformungen. Insbesondere bestimmte Papiersorten mit entsprechendem Fasergehalt können durch dieses Umlenken gut umgeformt und ein Eigenspannungszustand erzeugt werden, durch den ein selbsttätiges Ausrollen der Trennblattbahn an den Schnittkanten ermöglicht wird. Dieses Umlenken zur Erzeugung eines Eigenspannungszustands wird auch als "curlen" bezeichnet.

Wie groß der Umlenkwinkel zur Umlenkung der Trennblattbahn an der Umlenkeinrichtung ist, ist grundsätzlich beliebig. Um eine ausreichende Einwirkung auf die Trennblattbahn zu erzielen und dadurch den gewünschten Zugspannungszustand erzeugen zu können, ist es besonders vorteilhaft, wenn der Umlenkwinkel der Umlenkeinrichtung zwischen 90 Grad und 179 Grad liegt.

In welcher Weise die Zugfördereinrichtung konstruktiv ausgebildet wird, ist grundsätzlich beliebig. Bevorzugt sollte die Zugfördereinrichtung ein in Förderrichtung hinter der Umlenkeinrichtung angeordnetes Zugwalzenpaar umfassen, zwischen dem die Trennblattbahn unter Aufbringung einer Antriebskraft durchgefördert wird.

Weiter sollte die Zugfördereinrichtung bevorzugt eine in Förderrichtung vor der Umlenkeinrichtung angeordnete Bremseinrichtung umfassen, mit der die Förderbewegung der Trennblattbahn abgebremst werden kann. Durch das Zusammenspiel des Zugwalzenpaars, mit dem die Trennblattbahn in Förderrichtung gezogen wird, und der davor angeordneten Bremseinrichtung, mit der die Trennblattbahn abgebremst wird, kann in der Trennblattbahn die notwendige Zugspannung problemlos aufgebaut werden.

Die Bremseinrichtung kann bevorzugt in der Art einer Wellenbremse ausgebildet sein, mit der die Lagerwelle, auf der eine Vorratsrolle der Trennblattbahn drehbar gelagert ist, abgebremst werden kann. Um die Zugspannung in der Trennblattbahn prozessabhängig variieren zu können, kann eine in der Bremswirkung regelbare Bremseinrichtung und/oder ein in der Antriebskraft regelbares Zugwalzenpaar verwendet werden. Durch Änderung der Zugspannung kann bei gleichbleibenden Umlenkwinkel der Rollradius, mit dem sich die Trennblätter nach dem Ablängen selbsttätig aufrollen, eingestellt werden.

Die Umlenkeinrichtung selbst kann in einfacher Weise in der Art eines Umlenkbalkens ausgebildet sein, der mit einer Umlenkkante an der Trennblattbahn zur Anlage kommt. Je nach Radius der Spitze der Umlenkkante kann die Verformung der Trennblattbahn bei der Umlenkung variiert werden, so dass neben der Zugspannung und dem Umlenkwinkel ein weiterer Beeinflussungsparameter zur Verfügung steht.

Besonders effektiv kann das "curlen" durchgeführt werden, wenn die Umlenkeinrichtung mit einer keilförmigen Umlenkkante an der Trennblattbahn zum Eingriff kommt. Durch die scharfe Begrenzung der Kontaktfläche zwischen Umlenkkante und Trennblattbahn ergibt sich eine relativ starke Umformung der Trennblattbahn, so dass sich die Trennblätter nach dem Ablängen mit relativ kleinem Rollradius selbsttätig einrollen.

Die Ablängeinrichtung zur Durchtrennung der Trennblattbahn unter Bildung der Vorderkante bzw. Hinterkante kann bevorzugt in der Art eines Balkenmessers ausgebildet sein.

Besondere vorteilhaft ist es, wenn die Vorrichtung einen verstellbaren Niederhalter umfasst, der zwischen einer Eingriffsstellung und einer Ruhestellung verstellt werden kann. Der Niederhalter kommt dabei in der Eingriffsstellung am hinteren Überstand des Trennblatts zur Anlage und sorgt dafür, dass der durch die Eigenspannung selbsttätig eingerollte hintere Überstand des Trennblatts vor dem Einlaufen in die Wickeleinrichtung wieder abgerollt wird und sich sauber um die Außenseite des aufgerollten Wickels legt. In der Ruhestellung wird der Niederhalter soweit zurückgeschwenkt, dass das Durchfördern des Teigstücks zur Wickeleinrichtung ermöglicht wird.

Eine Ausführungsform der Erfindung ist in den Zeichnungen schematisch dargestellt und wird nachträglich beispielhaft erläutert.

Es zeigen:
- **Fig. 1**: eine Vorrichtung zur Herstellung von Wickeln aus einem Teigstück und einem Trennblatt in perspektivischer Ansicht von oben;
- **Fig. 2**: die Vorrichtung gemäß Fig. 1 in seitlicher Ansicht;
- **Fig. 3**: die Umlenkeinrichtung der Vorrichtung gemäß Fig. 1 in vergrößerter seitlicher Ansicht;
- **Fig. 4**: die von der Vorrichtung gemäß Fig. 1 geförderte Trennblattbahn mit den darauf liegenden Teigstücken im Bereich der Ablängeinrichtung vor dem Ablängen;
- **Fig. 5**: die Trennblattbahn mit den darauf aufliegenden Teigstücken gemäß Fig. 4 beim Aufsetzen der Ablängeinrichtung auf der Trennblattbahn;
- **Fig. 6**: die Trennblattbahn gemäß Fig. 5 mit den darauf aufliegenden Teigstücken nach dem Ablängen mit der Ablängeinrichtung;
- **Fig. 7**: die Wickeleinrichtung der Vorrichtung gemäß Fig. 1 zu Beginn des Aufrollens eines Wickels in vergrößerter seitlicher Ansicht;
- **Fig. 8**: die Wickeleinrichtung gemäß Fig. 7 zum Ende des Aufrollens eines Wickels in vergrößerter seitlicher Ansicht;
- **Fig. 9**: die Wickeleinrichtung gemäß Fig. 7 nach Ende des Aufrollens eines Wickels in vergrößerter seitlicher Ansicht;
- **Fig. 10**: einen Wickel aus einem Teigstück und einem Trennblatt, der gemäß der in Fig. 7 bis Fig. 9 dargestellten Weise aufgerollt wurde in vergrößerter seitlicher Ansicht.

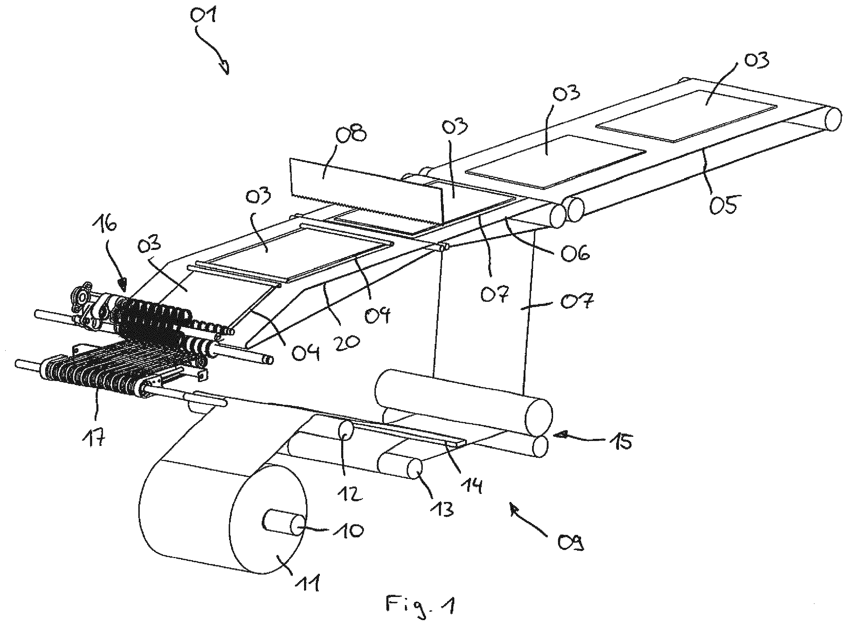

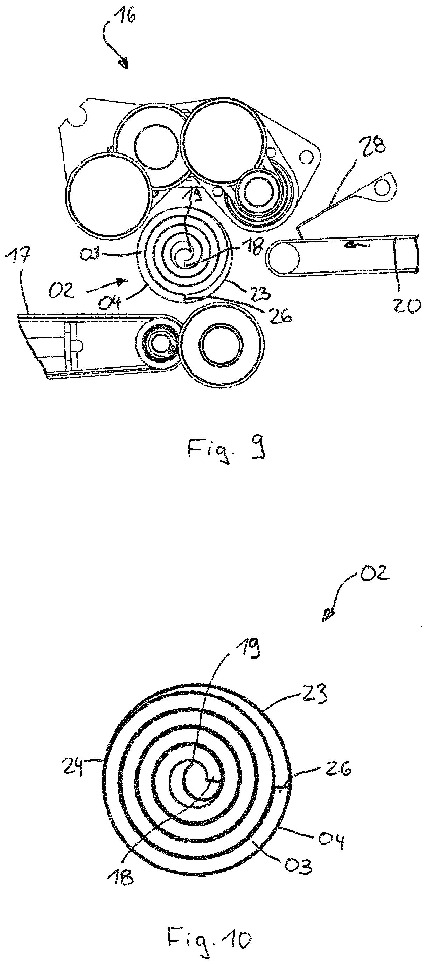

**Fig. 1** zeigt eine Vorrichtung 01 zur Herstellung von Wickeln 02 (siehe Fig. 10) auf einem Teigstück 03 und jeweils einem Trennblatt 04. Die mittels einer Fördereinrichtung 05 zugeförderten Teigstücke 03, bei denen es sich beispielsweise um Pizzateig oder Kuchenteig handeln kann, werden an eine Zuführeinrichtung 06 übergeben. In der Zuführeinrichtung 06 werden die Teigstücke 03 auf eine von unten zugeführte Trennblattbahn 07, bei der es sich beispielsweise um Backpapiermaterial handeln kann, aufgelegt.

Nach dem Auflegen der Teigstücke 03 auf die Trennblattbahn 07 wird die Trennblattbahn 07 anschließend mittels einer Ablängeinrichtung 08, die in der Art eines Balkenmessers ausgebildet ist, abgelängt, um dadurch den einzelnen Teigstücken 03 zugeordnete Trennblätter 04 zu bilden.

Vor dem Zuführen der Trennblattbahn 07 an der Zuführeinrichtung 06 wird diese in einer Einwirkeinrichtung 09 in einer Weise umgeformt, dass in der Trennblattbahn 07 ein vordefinierter Eigenspannungszustand in Förderrichtung erzeugt wird. Die Einwirkeinrichtung 09 besteht im Wesentlichen aus einer mit einer Wellenbremse ausgestatteten Lagerwelle 10, auf der eine Vorratsrolle 11 der Trennblattbahn 07 drehbar gelagert ist, zwei Umlenkwalzen 12 und 13, einer als Umlenkbalken ausgebildeten Umlenkeinrichtung 14 und einem Zugwalzenpaar 15. Mittels des Zugwalzenpaars 15 wird die Trennblattbahn 07 von der Vorratsrolle 11 abgezogen und in Richtung der Zuführeinrichtung 06 gefördert. Zugleich kann die Lagerwelle 10 mit einer geregelten Bremseinrichtung abgebremst werden, so dass die Trennblattbahn 07 zwischen der Vorratsrolle 11 und dem Zugwalzenpaar 15 eine vordefinierte Zugspannung aufweist. Mit dieser Zugspannung wird die Trennblattbahn 07 um die Umlenkeinrichtung 14 bei einem Umlenkwinkel 30 von circa 140 Grad umgelenkt und dabei ein Eigenspannungszustand erzeugt, der ein selbsttätiges Aufrollen der ungespannten Trennblattbahn 07 bewirkt. Mit anderen Worten wird die Trennblattbahn 07 durch die Umlenkeinrichtung 14 aufgrund der Zugspannung und dem Umlenkwinkel in einer Weise "gecurlt", das ein Aufrollen der nicht eingespannten Trennblattbahn bewirkt.

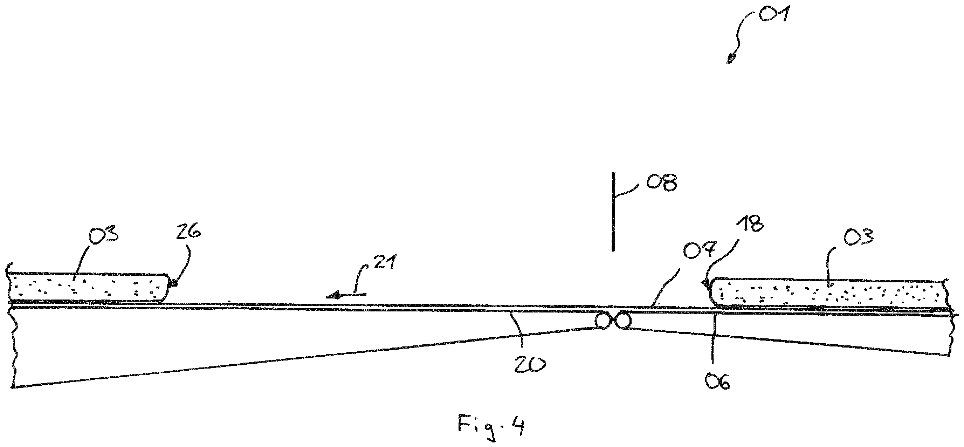

Aufgrund des mit der Einwirkeinrichtung 09 erzeugten Eigenspannungszustands rollen sich die Trennblätter 04 nach dem Ablängen mittels der Ablängeinrichtung 08 sowohl an der Vorderkante als auch an der Hinterkante auf und gelangen mit ihren jeweiligen Schnittkanten auf der Oberseite der Teigstücke 03 zur Anlage. Dies wird nachfolgend noch anhand der Zeichnungen Fig. 4 bis Fig. 6 näher erläutert. Die Teigstücke 03 mit dem jeweils zugeordneten Trennblatt 04 werden anschließend in der Wickeleinrichtung 16 zu Wickeln 02 aufgerollt und können anschließend mit einem Förderband 17 zu einer Verpackungsstation weitergefördert werden.

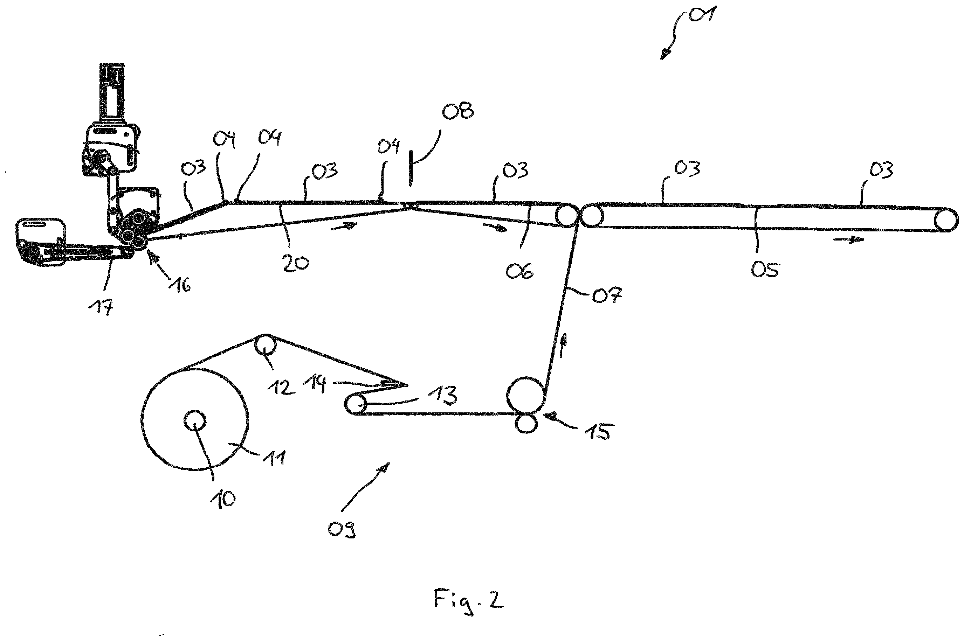

**Fig. 2** zeigt die Vorrichtung 01 in seitlicher Ansicht.

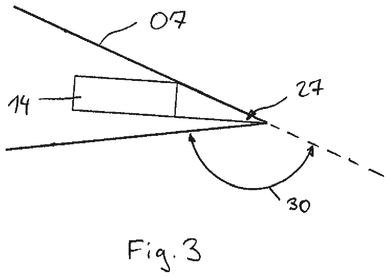

**Fig. 3** zeigt die Umlenkeinrichtung 14 in vergrößerter Ansicht. Man erkennt, dass die Umlenkeinrichtung 14 mit einer keilförmigen Umlenckante 27 über die gesamte Breite an der Trennblattbahn 07 zum Eingriff kommt.

Anhand der Zeichnungen in **Fig. 4** bis **Fig. 6** soll das erfindungsgemäße Verfahren näher erläutert werden. Unterhalb der Ablängeinrichtung 08 befindet sich die Übergabestelle zur Übergabe der Teigstücke 03 von der Zuführeinrichtung 06 auf ein nachgeordnetes Förderband 20. In dem in **Fig. 4** dargestellten Prozesszustand befindet sich die Ablängeinrichtung 08 noch mit Abstand oberhalb der Trennblattbahn 07 und die Trennblattbahn 07 wird mit den darauf aufliegenden Teigstücken 03 in Förderrichtung 21 gefördert.

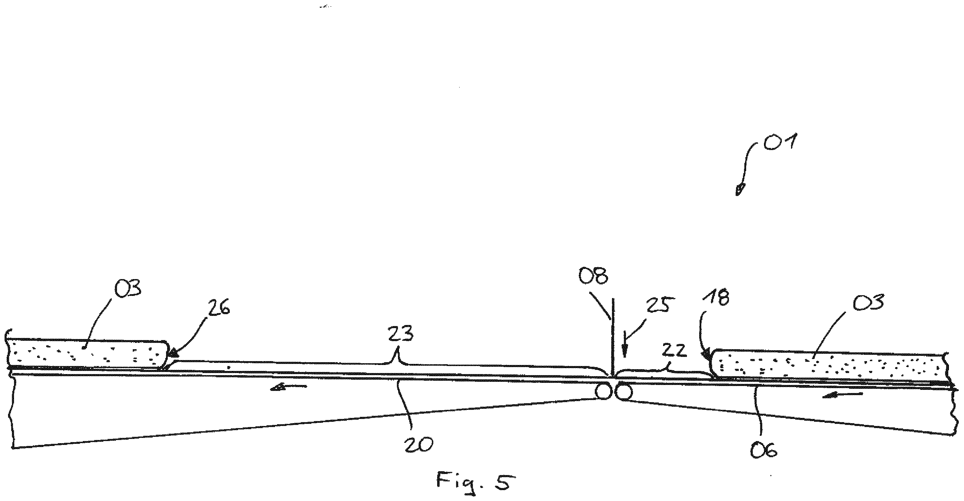

**Fig. 5** zeigt die Ablängeinrichtung 08 bei der Schnittbewegung in Stellrichtung 25 kurz vor dem Durchtrennen der Trennblattbahn 07 an einer vordefinierten Stelle. Man erkennt die Länge des vorderen Überstands 22 und des hinteren Überstands 23 mit denen das Trennblatt 04 nach dem Ablängen gegenüber dem Teigstück vorne und hinten übersteht.

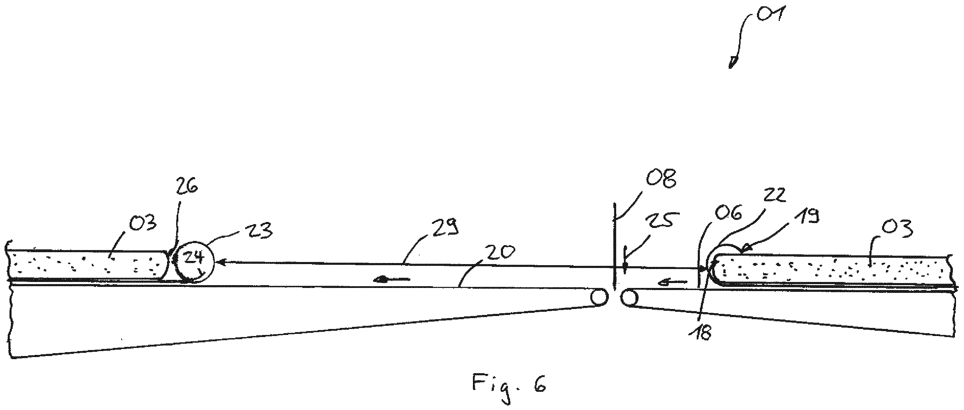

**Fig. 6** zeigt die Teigstücke 03 und die Trennblattbahn 07 nach dem Ablängen mit der Ablängeinrichtung 08. Durch den mittels der Einwirkeinrichtung 09 in der Trennblattbahn 07 erzeugten Eigenspannungszustand rollt sich der vordere Überstand 22 des Trennblatts 04 über die Vorderkante 18 des Teigstücks 03, so dass die Vorderkante 19 des Trennblatts 04 auf der Oberseite des Teigstücks 03 zur Anlage kommt. Zugleich rollt sich auch der hintere Überstand 23 des vorhergehenden Trennblatts 04 ein. Im Ergebnis wird durch das Aufrollen des Trennblatts 04 an der Vorderkante 19 und der Hinterkante 24 ein Abstand 29 zwischen zwei aufeinanderfolgenden Trennblättern 04 gebildet, so dass mit einer höheren Fördergeschwindigkeit gearbeitet werden kann. Durch das von der Eigenspannung der Trennblattbahn 07 bewirkte Aufrollen der Überstände 22 und 23 wird zudem verhindert, dass sich die Schnittkanten 19 und 24 der einzelnen Trennblätter während des dem Ablängen nachgeordneten Prozesses, insbesondere beim Aufrollen der Wickel 02, unkontrolliert bewegen und dadurch Störungen bewirken.

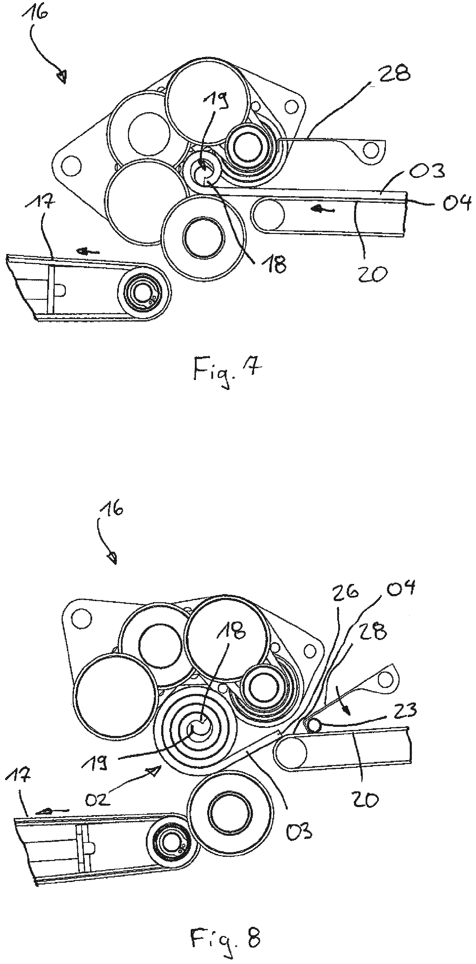

**Fig. 7** zeigt die Wickeleinrichtung 16 zu Beginn des Aufrollens eines Wickels 02 in vergrößerter seitlicher Ansicht. Man erkennt den Beginn des Aufrollens eines Wickels 02. Zu Beginn des Aufrollens wird die Vorderkante 18 des Teigstücks 03 zusammen mit dem darunter anliegenden Trennblatt 04 zum Kern des Wickels 02 aufgerollt. Die Vorderkante 19 des Trennblatts 04 steht dabei über die Vorderkante 18 des Teigstücks 03 über und liegt auf der Oberseite des Teigstücks 03 auf. Durch das Aufrollen des Wickels 02 wird der Überstand des Trennblatts 04 auf die Oberseite des Teigstücks 03 aufgelegt, so dass die Vorderkante 18 des Teigstücks 03 vom vorderen Überstand 22 des Trennblatts 04 umgriffen ist. Unkontrollierte Bewegungen der Vorderkante 19 des Trennblatts 04 werden somit vermieden und technische Störungen durch unzulässig verformte Trennblätter 04 vermieden.

Ein Niederhalter 28, der dem Abrollen des eingerollten hinteren Überstands 23 dient, befindet sich in seiner zurückgeschwenkten Ruhestellung, so dass das Teigstück 03 in die Wickeleinrichtung 16 eingefördert werden kann.

**Fig. 8** zeigt die Wickeleinrichtung 16 zum Ende des Aufrollens des Wickels 02. Sobald das Teigstück vollständig in die Wickeleinrichtung eingefördert ist, wird der Niederhalter 28 heruntergeschwenkt und verhindert dadurch das Einziehen des eingerollten hinteren Überstands 23. Der hinteren Überstand 23 wird zwischen dem Obertrum des Förderbands 20 und der Spitze des Niederhalters 28 durchgezogen und dabei abgerollt.

**Fig. 9** zeigt die Wickeleinrichtung 16 nach dem Aufrollen des Wickels 02. Die Wickeleinrichtung 16 öffnet sich nach unten und der fertig gewickelte und in seiner Form fixierte Wickel 02 fällt nach unten auf das Förderband 17.

**Fig. 10** zeigt den Wickel 02, der aus einem Teigstück 03 und einem zugeordneten Trennblatt 04 in der Wickeleinrichtung 16 aufgerollt wurde. Die Vorderkante 18 des Teigstücks 03 bildet den Kern des Wickels 02, wobei die Vorderkante 18 vom vorderen Überstand 22 des Trennblatts 04 überfangen ist.

Der hintere Überstand 23 umgreift nach dem Aufrollen des Wickels 02 den gesamten Wickel 02 in einer zusätzlichen Wickellage, so dass der Wickel 02 durch den umgewickelten Überstand 23 in seiner Form fixiert wird.

## Patentansprüche

1. Verfahren zur Herstellung eines Wickels (02) aus einem Teigstück (03) und einem Trennblatt (04), umfassend:
a) Zuführen des Teigstücks (03) auf eine in Förderrichtung (21) bewegte Trennblattbahn (04);
b) Ablängen der Trennblattbahn (07) unter Bildung eines dem Teigstück (03) zugeordneten Trennblatts (04) mit einer Vorderkante (19) vor dem Teigstück (03) und einer Hinterkante (24) hinter dem Teigstück (03), wobei das Trennblatt (04) an der Vorderkante (19) und/oder an der Hinterkante (24) mit einem vorderen Überstand (22) und/oder einem hinteren Überstand (23) unter dem Teigstück (03) übersteht;
c) Aufrollen des Trennblattes (04) mit dem Teigstück (03) unter Bildung des Wickels (02);
**dadurch gekennzeichnet,**
**dass** eine Trennblattbahn (07) verwendet wird, die einen Eigenspannungszustand aufweist, wobei die Eigenspannung der Trennblattbahn (07) nach dem Ablängen ein selbsttätiges Aufrollen des abgelängten Trennblatts (04) an der Vorderkante (19) und/oder an der Hinterkante (24) bewirkt.

2. Verfahren nach Anspruch 1,
**dadurch gekennzeichnet,**
**dass** die Vorderkante (19) des Trennblatts (04) nach dem Ablängen durch das selbsttätige Aufrollen auf der Oberseite des Teigstücks (03) zur Anlage kommt, wobei beim Aufrollen des Wickels (02) der vordere Überstand (22) des Trennblatts (04) über die Vorderkante (18) des Teigstücks (03) gelegt wird.

3. Verfahren nach Anspruch 1 oder 2,
**dadurch gekennzeichnet,**
**dass** der hintere Überstand (23) des Trennblattes (04) den Wickel (02) aus Teigstück (03) und Trennblatt (04) außenseitig umfasst und als Fixierelement zur Fixierung des Wickels (02) dient.

4. Verfahren nach einem der Ansprüche 1 bis 3,
**dadurch gekennzeichnet,**
**dass** durch das selbsttätige Aufrollen des Trennblatts (04) an der Vorderkante (19) und/oder an der Hinterkante (24) ein Abstand (29) in Förderrichtung (21) zwischen den aufeinanderfolgenden Trennblättern (04) gebildet wird.

5. Vorrichtung (01) zur Herstellung eines aufgerollten Wickels (02) aus einem Teigstück (03) und einem Trennblatt (04), mit einer Zuführeinrichtung (06), in der das Teigstück (03) in Förderrichtung (21) auf eine Trennblattbahn (07) aufgelegt werden kann, mit einer Ablängeinrichtung (08), mit der die Trennblattbahn (07) in einzelne Trennblätter (04), die jeweils einem Teigstück (03) zugeordnet sind, abgelängt werden kann, und mit einer Wickeleinrichtung (16), mit der ein Wickel (02) aus Teigstück (03) und Trennblatt (04) aufgerollt werden kann;
**dadurch gekennzeichnet,**
**dass** die Vorrichtung (01) eine Einwirkeinrichtung (09) umfasst, mit der der Eigenspannungszustand der Trennblattbahn (07) verändert werden kann, wobei die so erzeugte Eigenspannung der Trennblattbahn (07) nach dem Ablängen mit der Ablängeinrichtung (08) ein selbsttätiges Aufrollen der Trennblätter (04) an der Vorderkante (19) und/oder an der Hinterkante (24) bewirkt.

6. Vorrichtung nach Anspruch 5,
**dadurch gekennzeichnet,**
**dass** die Einwirkeinrichtung (09) eine Zugfördereinrichtung (10, 15) und eine Umlenkeinrichtung (14) umfasst, wobei mit der Zugfördereinrichtung (10, 15) Zugspannungen auf die Trennblattbahn (07) ausgeübt werden können, und wobei die unter Zugspannung stehende Trennblattbahn (07) an der Umlenkeinrichtung (14) um einen Umlenkwinkel (30) umgelenkt werden kann.

7. Vorrichtung nach Anspruch 6,
**dadurch gekennzeichnet,**
**dass** der Umlenkwinkel (30) der Umlenkeinrichtung (14) zwischen 90 Grad und 179 Grad liegt.

8. Vorrichtung nach Anspruch 6 oder 7,
**dadurch gekennzeichnet,**
**dass** die Zugfördereinrichtung ein in Förderrichtung (21) hinter der Umlenkeinrichtung (14) angeordnetes Zugwalzenpaar (15) umfasst, durch das die Trennblattbahn (07) unter Aufbringung einer Antriebskraft durchgefördert werden kann.

9. Vorrichtung nach einem der Ansprüche 6 bis 8,
**dadurch gekennzeichnet,**
**dass** die Zugfördereinrichtung eine in Förderrichtung (21) vor der Umlenkeinrichtung (14) angeordnete Bremseinrichtung umfasst, mit der die Förderbewegung der Trennblattbahn abgebremst werden kann.

10. Vorrichtung nach Anspruch 9,
**dadurch gekennzeichnet,**
**dass** die Bremseinrichtung in der Art einer Wellenbremse ausgebildet ist, mit der eine Lagerwelle (10), auf der eine Vorratsrolle (11) der Trennblattbahn (07) drehbar gelagert ist, abgebremst werden kann.

11. Vorrichtung nach einem der Ansprüche 6 bis 10,
**dadurch gekennzeichnet,**
**dass** die Umlenkeinrichtung (14) in der Art eines Umlenkbalkens ausgebildet ist, der mit einer Umlenkkante (27) an der Trennblattbahn zur Anlage kommt.

12. Vorrichtung nach Anspruch 11,
**dadurch gekennzeichnet,**
**dass** die Umlenkeinrichtung (14) mit einer keilförmigen Umlenkkante (27) an der Trennblattbahn (07) zum Eingriff kommt.

13. Vorrichtung nach einem der Ansprüche 5 bis 12,
**dadurch gekennzeichnet,**
**dass** die Ablängeinrichtung (08) in der Art eines Balkenmessers ausgebildet ist.

14. Vorrichtung nach einem der Ansprüche 5 bis 13,
**dadurch gekennzeichnet,**
**dass** die Vorrichtung (01) einen verstellbaren Niederhalter (28) umfasst, der zwischen einer Eingriffsstellung und einer Ruhestellung verstellt werden kann, wobei der Niederhalter (28) in der Eingriffsstellung am hinteren Überstand (23) des Trennblatts (04) zur Anlage kommen kann, und wobei der Niederhalter (28) in der Ruhestellung das Durchfördern des Teigstücks (03) zur Wickeleinrichtung (16) ermöglicht.

## Claims

1. A method for producing a roll (02) made of a dough piece (03) and a separator sheet (04), comprising:
a) feeding the dough piece (03) onto a separator sheet web (07) moved in a conveying direction (21);
b) cutting-to-length the separator sheet web (07) to form a separator sheet (04) which is assigned to the dough piece (03) and has a front edge (19) in front of the dough piece (03) and a rear edge (24) behind the dough piece (03), the separator sheet (04) protruding from below the dough piece (03) at the front edge (19) and/or the rear edge (24) with a front protrusion (22) and/or a rear protrusion (23);
c) rolling up the separator sheet (04) with the dough piece (03) to form the roll (02);
**characterized in that**
a separator sheet web (07) is used which has a residual-stress state, the residual stress of the separator sheet web (07) causing the cut-to-length separator sheet (04) to roll up automatically at the front edge (19) and/or the rear edge (24) after the cutting-to-length process.

2. The method according to claim 1,
**characterized in that**
the front edge (19) of the separator sheet (04) comes to rest on the upper side of the dough piece (03) by rolling up automatically after the cutting-to-length process, wherein the front protrusion (22) of the separator sheet (04) is folded over the front edge (18) of the dough piece (03) when the roll (02) is rolled up.

3. The method according to claim 1 or 2,
**characterized in that**
the rear protrusion (23) of the separator sheet (04) envelops the roll (02) made of the dough piece (03) and the separator sheet (04) on the outside and serves as a fixing element for fixing the roll (02).

4. The method according to any one of claims 1 to 3,
**characterized in that**
a distance (29) is formed in the conveying direction (21) between the separator sheets (04) arranged one after the other by the automatic rolling up of the separator sheet (04) at the front edge (19) and/or at the rear edge (24).

5. A device (01) for producing a rolled up roll (02) made of a dough piece (03) and a separator sheet (04), having a feeding device (06) in which the dough piece (03) can be placed on a separator sheet web (07) in the conveying direction (21), a cutting-to-length device (08) by which the separator sheet web (07) can be cut-to-length into individual separator sheets (04), each of which is assigned to a dough piece (03), and a winding device (16) by which a roll (02) made of a dough piece (03) and a separator sheet (04) can be rolled up;
**characterized in that**
the device (01) comprises an impact device (09) by which the residual-stress state of the separator sheet web (07) can be changed, wherein the residual stress of the separator sheet web (07) generated in this way causes the separator sheets (04) to roll up automatically at the front edge (19) and/or the rear edge (24) after the cutting-to-length process.

6. The device according to claim 5,
**characterized in that**
the impact device (09) comprises a traction conveyor device (10, 15) and a deflection device (14), wherein tensile stresses can be exerted on the separator sheet web (07) by the traction conveyor device (10, 15), and wherein the separator sheet web (07), which is under tensile stress, can be deflected at the deflection device (14) by a deflection angle (30).

7. The device according to claim 6,
**characterized in that**
the deflection angle (30) of the deflection device (14) is between 90 degrees and 179 degrees.

8. The device according to claim 6 or 7,
**characterized in that**
the traction conveyor device comprises a pair of draw rollers (15) disposed downstream of the deflection device (14) in the conveying direction (21), the separator sheet web (07) being able to be conveyed through said pair of draw rollers by applying a driving force.

9. The device according to any one of claims 6 to 8,
**characterized in that**
the traction conveyor device comprises a braking device disposed upstream of the deflection device (14) in the conveying direction (21), the conveying movement of the separator sheet web being able to be decelerated by said braking means.

10. The device according to claim 9,
**characterized in that**
the braking means is implemented as a shaft brake by which a bearing shaft (10), on which a supply roll (11) of the separator sheet web (07) is rotatably mounted, can be decelerated.

11. The device according to any one of claims 6 to 10,
**characterized in that**
the deflection device (14) is formed like a deflection bar which comes into contact with a deflecting edge (27) at the separator sheet web.

12. The device according to claim 11,
**characterized in that**
the deflection device (14) engages with a wedge-shaped deflecting edge (27) at the separator sheet web (07).

13. The device according to any one of claims 5 to 12,
**characterized in that**
the cutting-to-length device (08) is formed like a bar knife.

14. The device according to any one of claims 5 to 13,
**characterized in that**
the device (01) comprises an adjustable holding-down device (28), which can be adjusted between an engaged position and a rest position, the holding-down device (28) coming into contact with the rear protrusion (23) of the separator sheet (04) in the engaged position, and the holding-down device (28) allowing the dough piece (03) to be conveyed through to the winding device (16) in the rest position.

## Revendications

1. Procédé de fabrication d'un rouleau (02) constitué d'un morceau de pâte (03) et d'une feuille de séparation (04), comprenant les étapes consistant à :
a) amener le morceau de pâte (03) sur une bande de feuille de séparation (04) déplacée dans la direction de transport (21) ;
b) découper la bande de feuille de séparation (07) à longueur pour former une feuille de séparation (04) associée au morceau de pâte (03) avec un bord avant (19) devant le morceau de pâte (03) et un bord arrière (24) derrière le morceau de pâte (03), dans lequel la feuille de séparation (04) fait saillie au niveau du bord avant (19) et/ou au niveau du bord arrière (24) avec une saillie avant (22) et/ou une saillie arrière (23) sous le morceau de pâte (03) ;
c) enrouler la feuille de séparation (04) avec le morceau de pâte (03) pour former le rouleau (02) ;
**caractérisé en ce que**,
une bande de feuille de séparation (07) présentant une contrainte résiduelle est utilisé, dans lequel, après la coupe à longueur, la contrainte résiduelle de la bande de feuille de séparation (07) provoque au niveau du bord avant (19) et/ou au niveau du bord arrière (24) un enroulement automatique de la feuille de séparation (04) coupée à longueur.

2. Procédé selon la revendication 1,
**caractérisé en ce que**,
grâce à l'enroulement automatique, le bord avant (19) de la feuille de séparation (04) vient reposer sur le côté supérieur du morceau de pâte (03) après la coupe à longueur, dans lequel la saillie avant (22) de la feuille de séparation (04) est placée par-dessus le bord avant (18) du morceau de pâte (03) lors de l'enroulement du rouleau (02).

3. Procédé selon la revendication 1 ou 2,
**caractérisé en ce que**,
la saillie arrière (23) de la feuille de séparation (04) entoure de manière extérieure le rouleau (02) constitué du morceau de pâte (03) et de la feuille de séparation (04) et sert d'élément de fixation pour fixer le rouleau (02).

4. Dispositif selon l'une quelconque des revendications 1 à 3,
**caractérisé en ce que**,
un espacement (29) entre les feuilles de séparation (04) successives est formé dans la direction de transport (21) grâce à l'enroulement automatique de la feuille de séparation (04) au niveau du bord avant (19) et/ou au niveau du bord arrière (24).

5. Dispositif (01) permettant de produire un rouleau (02) enroulé constitué d'un morceau de pâte (03) et d'une feuille de séparation (04), avec un appareil d'acheminement (06) au sein duquel le morceau de pâte (03) peut être placé sur une bande de feuille de séparation (07) dans la direction de transport (21), avec un appareil de coupe à longueur (08) au moyen duquel la bande de feuille de séparation (07) peut être coupée à longueur en feuilles de séparation (04) individuelles qui sont associées respectivement à un morceau de pâte (03), et avec un appareil d'enroulement (16) au moyen duquel un rouleau (02) constitué d'un morceau de pâte (03) et d'une feuille de séparation (04) peut être enroulé ; **caractérisé en ce que**,
le dispositif (01) comprend un appareil influenceur (09) au moyen duquel l'état de contrainte résiduelle de la bande de feuille de séparation (07) peut être modifié, dans lequel la contrainte résiduelle ainsi produite de la bande de feuille de séparation (07) provoque un enroulement automatique des feuilles de séparation (04) au niveau du bord avant (19) et/ou au niveau du bord arrière (24) après la coupe à longueur avec l'appareil de coupe à longueur (08).

6. Dispositif selon la revendication 5,
**caractérisé en ce que**,
l'appareil influenceur (09) comprend un appareil de traction (10, 15) et un appareil de déviation (14), dans lequel des contraintes de traction peuvent être exercées sur la bande de feuille de séparation (07) au moyen de l'appareil de traction (10, 15), et dans lequel la bande de feuille de séparation (07) soumise à des contraintes de traction peut être déviée à raison d'un angle de déviation (30) au niveau de l'appareil de déviation (14).

7. Dispositif selon la revendication 6,
**caractérisé en ce que**,
l'angle de déviation (30) de l'appareil de déviation (14) est compris entre 90 degrés et 179 degrés.

8. Dispositif selon la revendication 6 ou 7,
**caractérisé en ce que**,
l'appareil de traction comprend une paire de tambours de traction (15) agencée derrière l'appareil de déviation (14) dans la direction de transport (21) et grâce à laquelle la bande de feuille de séparation (07) peut être transportée par application d'une force d'entraînement.

9. Dispositif selon l'une quelconque des revendications 6 à 8,
**caractérisé en ce que**,
l'appareil de traction comprend un appareil de freinage agencé devant l'appareil de déviation (14) dans la direction de transport (21) et au moyen duquel le mouvement de transport de la bande de feuille de séparation peut être freiné.

10. Dispositif selon la revendication 9,
**caractérisé en ce que**,
l'appareil de freinage est conçu à la manière d'un frein d'arbre au moyen duquel un arbre de palier (10), sur lequel un rouleau d'alimentation (11) de la bande de feuille de séparation (07) est monté rotatif, peut être freiné.

11. Dispositif selon l'une quelconque des revendications 6 à 10,
**caractérisé en ce que**,
l'appareil de déviation (14) est conçu à la manière d'une poutre de déviation dont un bord de déviation (27) vient reposer au niveau de la bande de feuille de séparation.

12. Dispositif selon la revendication 11,
**caractérisé en ce que**,
l'appareil de déviation (14) vient en prise avec un bord de déviation (27) en forme de coin au niveau de la bande de feuille de séparation (07).

13. Dispositif selon l'une quelconque des revendications 5 à 12,
**caractérisé en ce que**,
l'appareil de coupe à longueur (08) est conçu à la manière d'une lame formant poutre.

14. Dispositif selon l'une quelconque des revendications 5 à 13,
**caractérisé en ce que**,
le dispositif (01) comprend un presse-feuilles (28) réglable pouvant être réglé entre une position de mise en prise et une position de repos, dans lequel, dans la position de mise en prise, le presse-feuilles (28) peut venir reposer au niveau de la saillie arrière (23) de la feuille de séparation (04), et dans lequel, dans la position de repos, le presse-feuilles (28) permet le transport du morceau de pâte (03) vers l'appareil d'enroulement (16).
